# EUROPEAN PATENT SPECIFICATION

(11) **EP 2 242 352 B1**
(45) Date of publication and mention of the grant of the patent: **14.04.2021**
(21) Application number: 07862903.7
(22) Date of filing: 14.12.2007
(51) Int. Cl.: A01G 23/00, A01G 24/00

(54) **METHOD OF ACCELERATING THE GROWTH AND DEVELOPMENT OF TREES VIA ENHANCED ROOT DEVELOPMENT**
VERFAHREN ZUM BESCHLEUNIGEN DES WACHSTUMS UND DER ENTWICKLUNG VON BÄUMEN DURCH VERBESSERTE WURZELENTWICKLUNG
PROCÉDÉ D'ACCÉLÉRATION DE LA CROISSANCE ET DU DÉVELOPPEMENT D'ARBRES PAR UN ENRACINEMENT AMÉLIORÉ

(43) Date of publication of application: 27.10.2010
(73) Proprietor: Lovelace, Wayne, Elsberry, MO 63343 (US); Lovelace, Judy, Elsberry, MO 63343 (US)
(72) Inventor: LOVELACE, Wayne, Elsberry, MO 63343 (US); STEAVENSON, Hugh, Elsberry, MO 63343 (US); SUDDARTH, Bob, Elsberry, MO 63343 (US)
(74) Representative: Klunker IP Patentanwälte PartG mbB
(86) International application number: PCT/US2007/025580
(87) International publication number: WO 2009/078827

(56) References cited:
- US-A1- 2003 089 035
- LOVELACE W: "The root production method (RPM) system for producing container trees", INTERNATIONAL PLANT PROPAGATORS' SOCIETY. COMBINED PROCEEDINGS OF ANNUAL MEETINGS, INTERNATIONAL PLANT PROPAGATORS' SOCIETY, INC, US, vol. 48, 1 January 1998 (1998-01-01), pages 556-557, XP008137419, ISSN: 0538-9143
- WALKER: "Development and construction of an air-pruning propagation bench, and its proper use", INTERNET CITATION, 17 September 2006 (2006-09-17), XP008137420, Retrieved from the Internet: URL:http://depts.washington.edu/propplnt/C hapters/air-pruning.htm [retrieved on 2011-06-01]
- DANIEL C DEY ET AL: "Production and early field performance of RPM? seedlings in Missouri floodplains", PROCEEDINGS OF THE 6TH WALNUT COUNCIL RESEARCH SYMPOSIUM,, 1 January 2004 (2004-01-01), pages 59-65, XP008137422,
- LOVELACE.: 'The root production method (RPM) system for producing container trees.' COMBINED PROCEEDINGS OF THE INTERNATIONAL PLANT PROPAGATORS SOCIETY. vol. 48, 1998, pages 556 - 557, XP008137419
- WALKER: 'Development and construction of an air-pruning propagation bench, and its proper use', [Online] 17 September 2006, XP008137420 Retrieved from the Internet: <URL:http://web.archive.org/web/20060917202 142/http://depts.washington.edu/propplnt/Ch apters/air- pruning.htm>
- SOONER PLANT FARM, [Online] 25 August 2007, Retrieved from the Internet: <URL:http://web.archive.org/web/20070825051 426/http://www.soonerplantfarm.com/index.cf m/fuseact ion/resources.faqs/index.htm>
- SHILLINGLAW ET AL.: 'Seed germination ?tricks of the trade? from prairie nursery', [Online] 23 March 2007, Retrieved from the Internet: <URL:http://web.archive.org/web/20060323091 507/http://www.prairienursery.com/pdf/seed_ tricks.pdf.>
- DEY ET AL.: 'Production and early field performance of RPM? seedlings in Missouri floodplains.' PROCEEDINGS OF THE 6TH WALNUT COUNCIL RESEARCH SYMPOSIUM., [Online] 2004, XP008137422 Retrieved from the Internet: <URL:http://www.ncrs.fs.fed.us/pubs/gtr/gtr _ nc243.pdf.>
- PHILLIPS, RALPH: "elevation, on-or off-tree collection influence the viability of blue oak acorns", CALIFORNIA AGRICULTURE, vol. 46, no. 5, 31 October 1992 (1992-10-31), pages 30-32, usa

## Description

### FIELD OF THE INVENTION

The present invention relates to improved methods for accelerating the growth and development of trees through enhanced root development.

### BACKGROUND OF THE INVENTION

There is an ever-increasing demand for native hardwoods, but commercial farming of this class of trees is frustrated by the slow growth of this class of trees and the difficulty in transplanting them. Similarly, non-commercial reforestation with hardwoods is frustrated by the slow growth and transplantation difficulties. "Traditional" production methods for native hardwoods such as Oaks, Hickories, Ash, Nut trees and others are notoriously slow growing and tend to develop a coarse, carrot-like dominant tap root which makes them very difficult to transplant both in the nursery and especially in out-planting situations - where mortality rates often ran as high as 70 percent or more.

To try and overcome the problems associated with transplantability of native hardwoods and other difficult to transplant species, many nurseries began to "root-prune" their plants while in the field one to three years prior to sale in hopes of developing a "secondary" root system which would give this class of plants a better chance of surviving the out-planting process. The major problem associated with root-pruning in the field is that it not only "shocks" the plants because its root system has been severed but also halts growth and forces the grower to "wait" for another year or more for the root system to re-develop. Although the process of root pruning in the field greatly helped to minimize loss after out-planting, the process was slow, costly and extended the time a plant must remain in the nursery.

One prior art method of root pruning is disclosed in Huang and Liang, Effects of Air-Pruning on Cutting and Seedling Growth in Container Tree Propagation, SNA Research Conference 1987.

### SUMMARY OF THE INVENTION

This inventions relates to a method of accelerating the growth and development of trees via an enhanced root system. The method of the present invention comprises the features indicated in claim 1. Embodiments of the invention are claimed in the dependent claims.

Lovelace, The Root Production Method (RPM) System for Producing Container Trees, The International Plant Propagators' Society Combined Proceedings, Vol. 48 (1998), suggests a root production method involving a first and a second root pruning step.

### BRIEF DESCRIPTION OF THE FIGURES

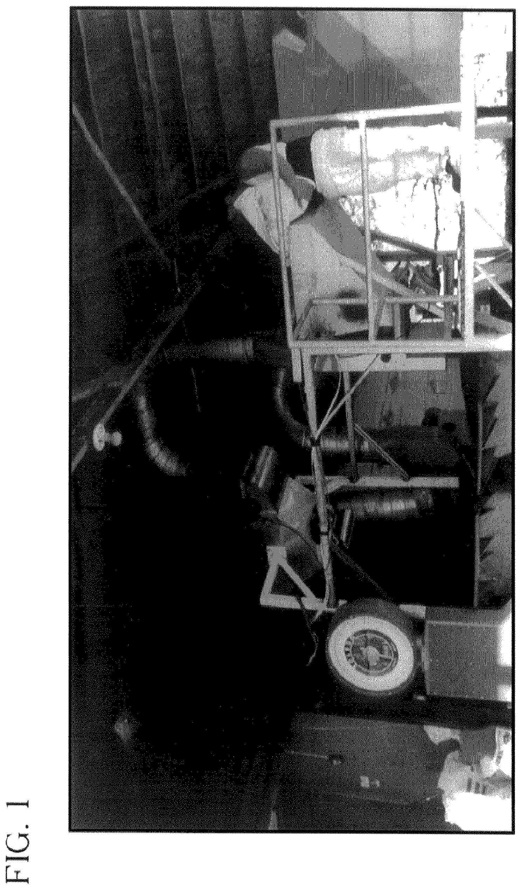

FIG. 1 is a photograph illustrating the grading of seed by density using a Jesse Aspirator.

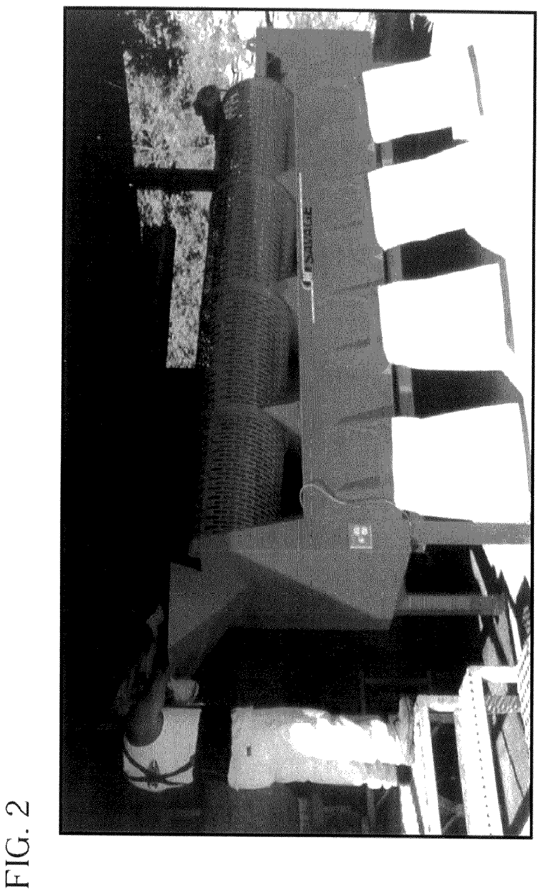

FIG. 2 is a photograph illustrating the grading of seed by weight and size using a Savage Sizer and an Oliver Gravity Table for smaller seed.

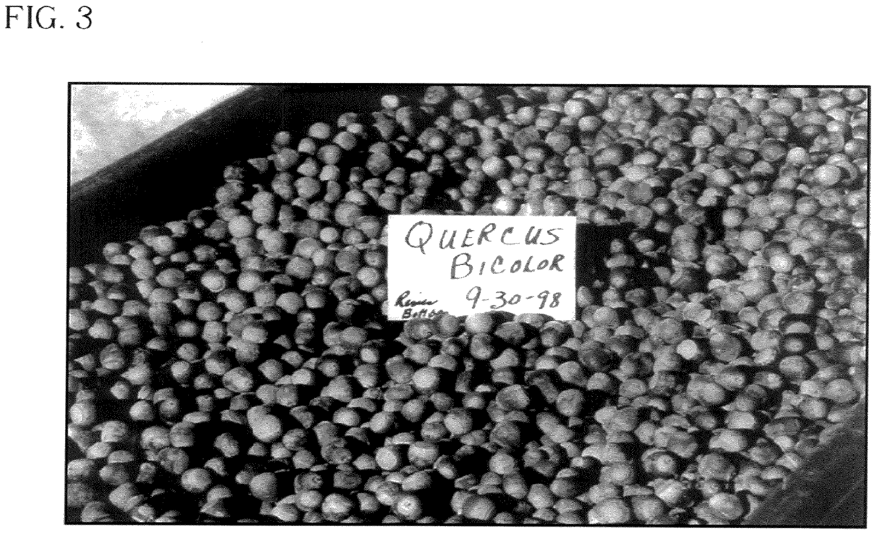

FIG. 3 is a photograph showing graded seed of Quercus bicolor. Swamp White Oak F2 Orchard--large seed 76 per pound, medium seed 100 per pound and small seed 142 per pound. Swamp White Oak F2 Orchard (Special Tree #6) 64 per pound (1 pound = 0.454 kg).
FIG. 4 is a photograph illustrating the bottomless flats used for air pruning in accordance with the principles of this invention;
FIG. 5 is a photograph of seed of Quercus bicolor shown on the surface of growing media in preparation for cold stratification;
FIG. 6 is a photograph of seeds of other species shown on the surface of growing media in preparation for cold stratification;
FIG. 7 is a photograph of stacks of flats of seeds ready for cold stratification;
FIG. 8 is a photograph showing stacks of flats of seeds in cold stratification;
FIG. 9 is a photograph showing stacks of flats of seeds in cold stratification;
FIG. 10 is a photograph showing flats after stratification, placed in a greenhouse on bottomless benches for germination;
FIG. 11 is a photograph showing root radicals beginning to penetrate the bottomless flat;
FIG. 12 is a close-up photograph showing root radicals beginning to penetrate the bottomless flat;

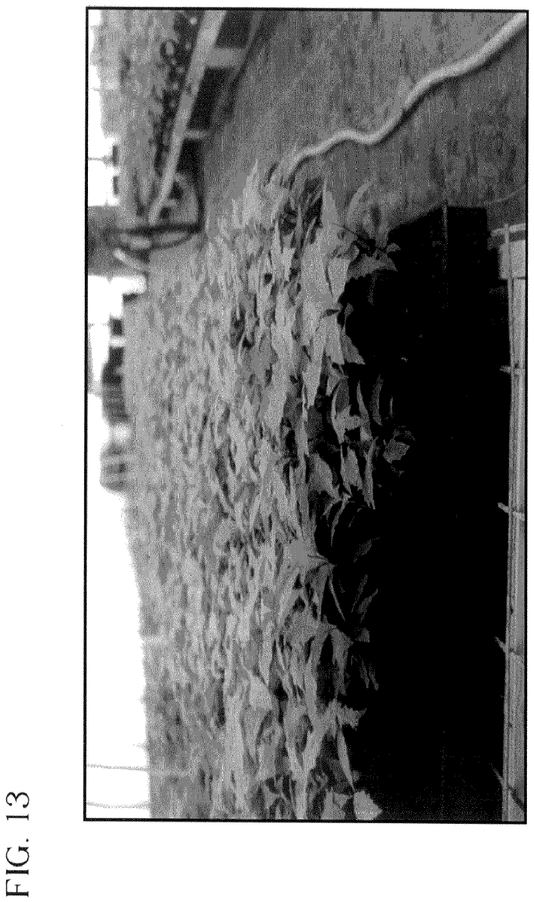

FIG. 13 is a photograph showing germinating seedlings of Quercus bicolor;

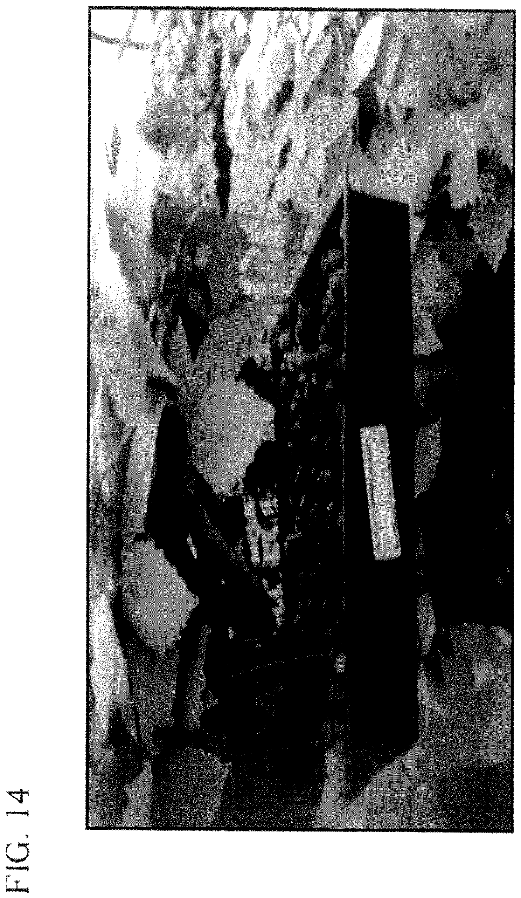

FIG. 14 is a photograph showing germinating seedlings of Quercus bicolor prior to grading and transplantation for the second air root pruning step;

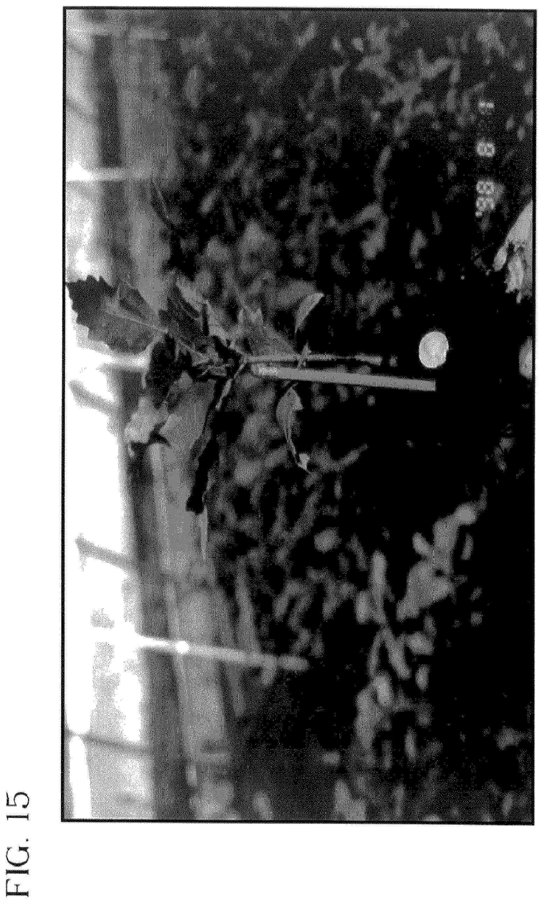

FIG. 15 is a photograph showing germinating seedlings of Quercus bicolor during the step of grading the seedlings by height and caliper resulting in taller individuals with larger caliper.
FIG. 16 is a photograph showing the seedlings transplanted into bottomless bands in flats for the second air-pruning step;
FIG. 17 is a photograph showing the root system of Quercus bicolor after 30 days, at the time of transplantation for the second root pruning step;

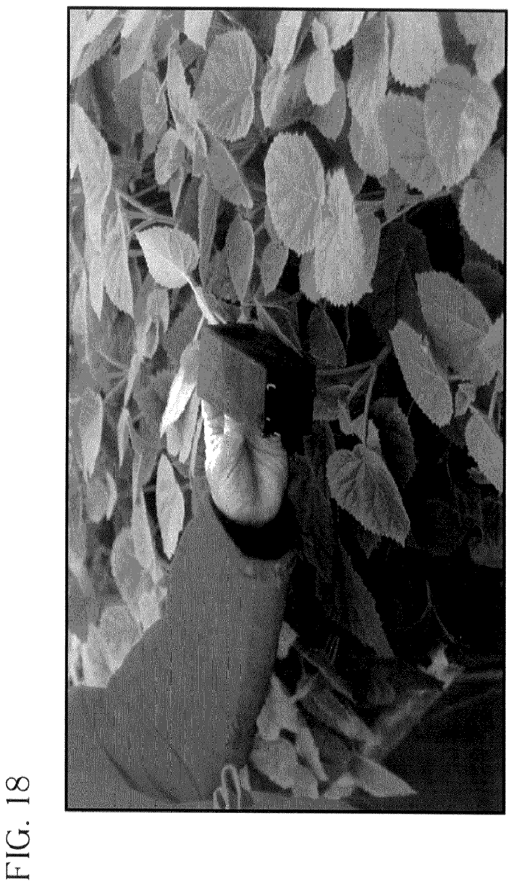

FIG. 18 is a photograph showing the root radicals protruding through the bottom of the bottomless bands during the second air root pruning step;
FIG. 19 is a photograph showing container ready for transplantation of the seedlings after the second root pruning step;
FIG. 20 is a photograph illustrating the transplantation of seedlings after the second air root pruning step;
FIG. 21 is a photograph showing Quercus rubra (Northern Red Oak) seedlings at a height of about 2.13 m (7 feet), 210 days from germination;
FIG. 22 is a photograph showing the root system of the seedlings shown in FIG. 21;
FIG. 23 is a photograph showing mycorrhizae on the roots of seedlings grown in accordance with the principles of this invention;
FIG. 24 is a photograph showing the development of a root system of an oak tree after four years;
FIG. 25 is a photograph showing the development of root system of an oak tree after four years:
FIG. 26 is a photograph showing the early fruiting (3 years) of Quercus bicolor grown in accordance with the principles of this invention:
FIG. 27 is a photograph showing the early fruiting (3 years) of Quercus bicolor grown in accordance with the principles of this invention;
FIG. 28 is a photograph showing the early fruiting (3 years) of Quercus muehlenbergii grown in accordance with the principles of this invention;
FIG. 29 is a photograph showing a bottomless flat with 0.95 cm (3/8 in.) openings for air pruning used in Step 1;
FIG. 30 is a photograph of a bottomless pot measuring 9.1 cm x 9.1 cm x 10.8 cm (3 9/16 in. x 39/16 in. x 4 1/4 in.) deep used in Step 1;
FIG. 31 is a photograph of pecan seedlings new system of air pruning at 7.6 cm (3 in.) depth on left showing better growth at time of selection and grading;
FIG. 32 is a photograph showing the difference between air root pruning at 5.1 cm (2 inches) (left) versus at 7.6 cm (3 inches) (right);

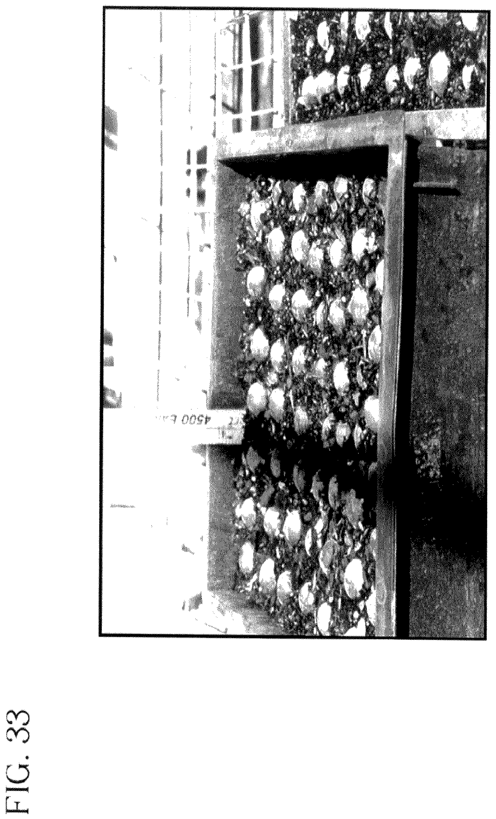

FIG. 33 is a photograph of Pecans seeded in an air pruning flat;

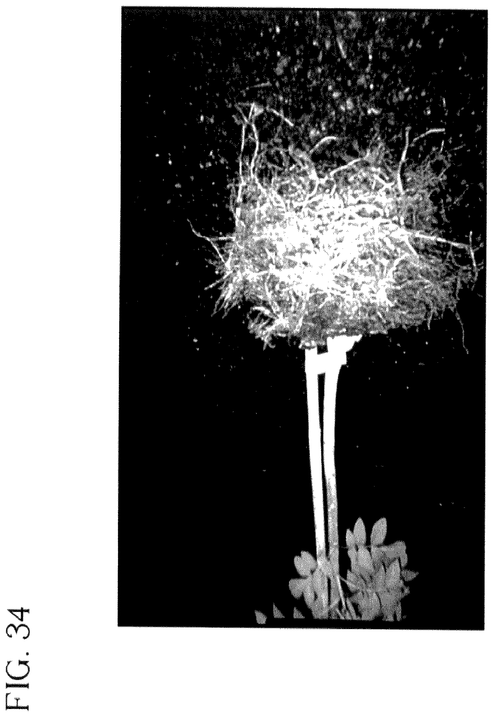

FIG. 34 is a photograph of European Ash root 160 days from planting grown in accordance with the principles of this invention;

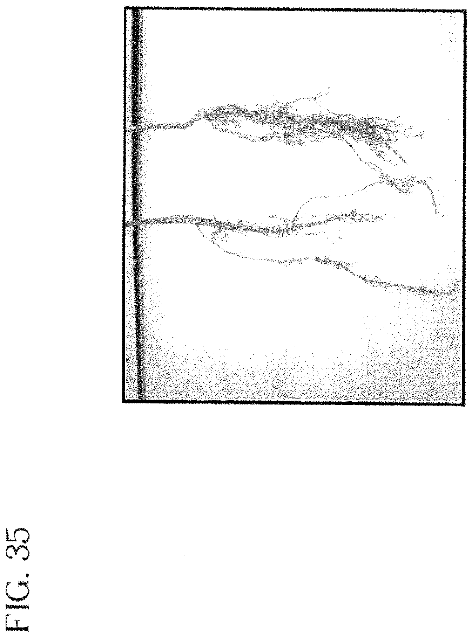

FIG. 35 is a photograph of European Ash root 160 days from planting grown with conventional methods;
FIG. 36 is a photograph of the root system of two or three year old Pecan grown with convention methods;
FIG. 37 is a photograph of two air pruned 75 day old Pecan grown in accordance with the principles of this invention.

### DETAILED DESCRIPTION OF THE INVENTION

The method of the present invention involves consideration of seed selection. It further involves consideration of seed handling including stratification. It further involves air pruning, preferably in two steps using air as a means of root pruning to enhance the development of a dense fibrous root mass. Lastly, the method involves selection of growing media, including fertilizer, consideration of air space, wetting agents, and components. The method of the present invention accelerates rate of growth, and induces early flowering and fruiting.

Seed selection is an important component in the acceleration of tree growth. Special attention is provided to assure seed is selected from superior individual parents, showing outstanding phenotype, typical of the particular specie or variety of tree. Attention also must be focused on the climate zone of origin, including attitude and locations within its native geographical range, normally referred to as "provenance". Within a given provenance, seed is selected based on environmental conditions of the final location. It is desirable to select seed from the same species growing in the same environmental conditions, e.g., a flood plain or an upland site. Seed is collected site specific. These different types of seed are referred to as ecotypes. Proper selection results in tree improvement, superior adaption to planting sites all of which add to economic and aesthetic value.

Seed handling is also an important component in the acceleration of tree growth. Collected seed are processed by cleaning out any foreign materials. They are then processed through an aspirator to separate out the heaviest individual seed. Density is the most important factor in germination capacity of any seed, and survival of the seedling. Density is a measure of the stored food reserve. After the heaviest seed are selected they are then processed through a sieve which grades them by size, e.g. three (3) or four (4) different sizes. Only the largest, heaviest seed are used. Since these factors (weight, size, and density) are genetic in nature these processes have definite effects on the genetic improvement of the progeny.

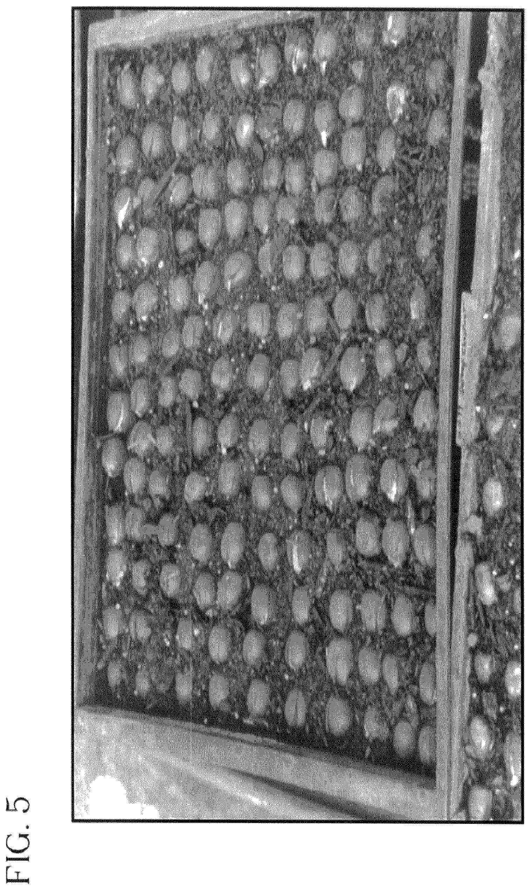

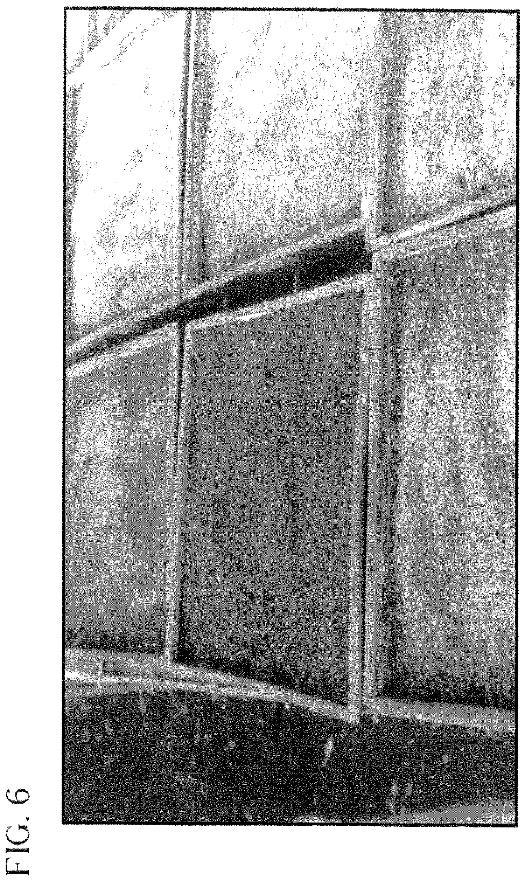

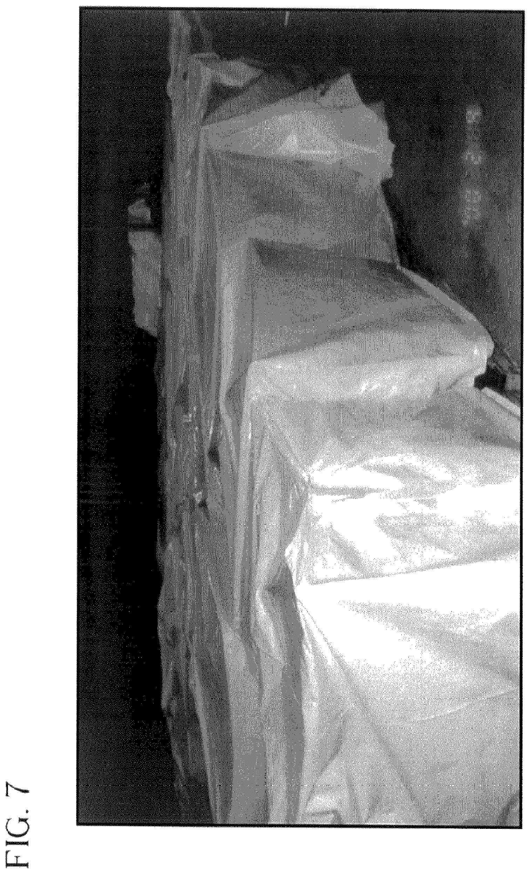

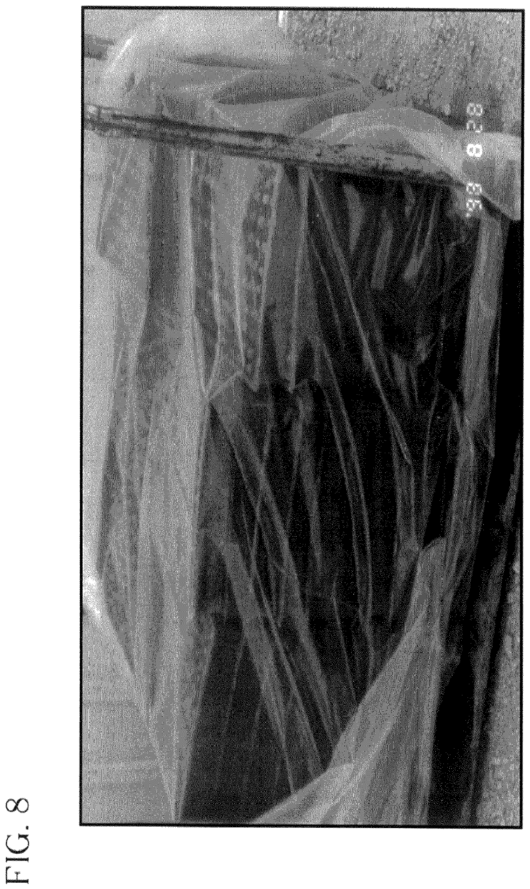

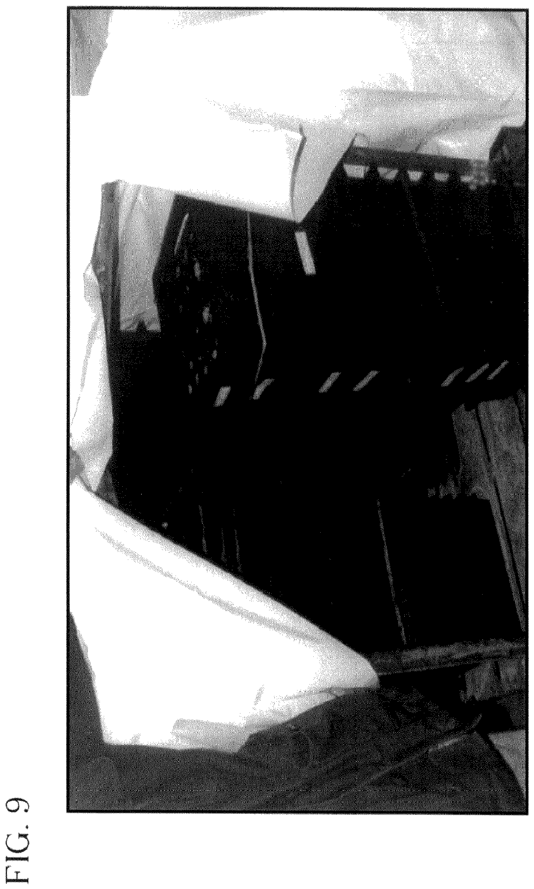

Seed stratification and timing are also important in the acceleration of tree growth. The length of time required for stratification is predetermined so germination can start (For example February 1st.) Thus the seed must be handled in such a manner that all stratification requirements are satisfied prior to February 1st. Thus, for example, a seed requiring ninety (90) days of cold stratification would have to be placed in our cold storage November 1st, so that it could be germinated by February 1st. As shown in FIGS. 5 and 6, the seed is preferably pre-sown in the stratification media (which is preferably the same as growing medium, described below) and as shown in FIGS. 7, 8 and 9, the seeded trays are stacked in a cold storage room where temperature is maintained at 0° C (32° F). The seed are placed on the surface of the growing medium. When germination begins, the outer seed coat splits exposing the seed cotyledons. When exposed to light the cotyledons turn from their normal pure white to green, indicating they are photosynthesizing and producing additional energy for the germinating seedling. The inventors' research shows that most of the energy produced by the seed's cotyledons goes to the production of the plants root system, thus adding to the primary goal of producing and enhancing an improved root system. This is in contrast to the established conventional rule that the depth of seed planting should be twice the diameter of the seed. The 0° C (32° F) temperature will prevent pre-germination of seed once its ripening requirements have been satisfied. This 0° C (32° F) temperature is also in contrast to the established convention wisdom of temperatures between about 2.8° C (37° F) to 5° C (41° F). Still another difference from conventional methods is placing the seeds in growing media. Historically seeds have been stratified separately and then seeded immediately prior to germinating.

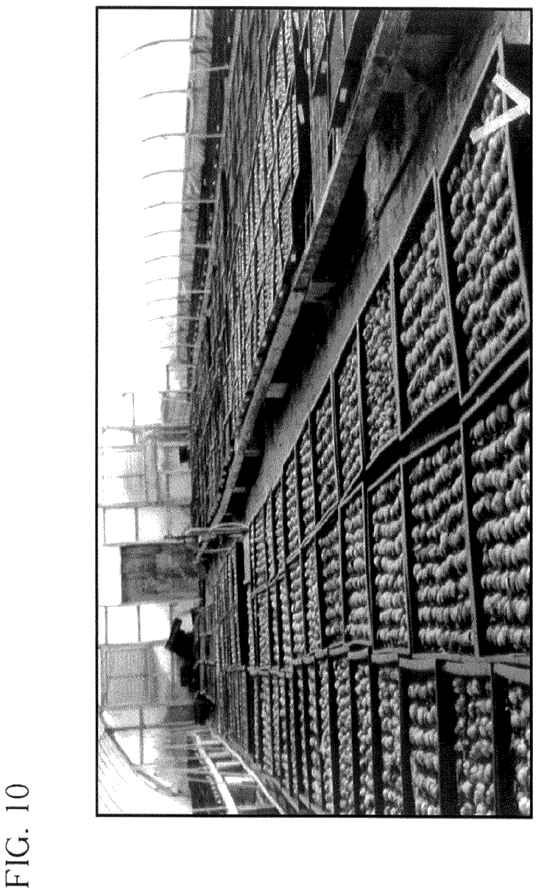

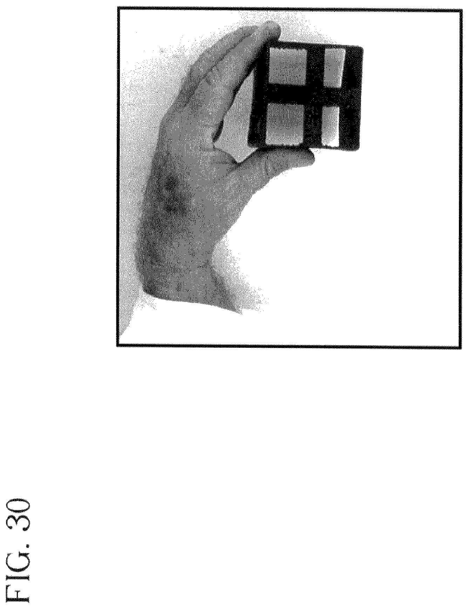

The timing of the above steps in the method is based on having the seedlings processed through termination, Step I root pruning, grading, and Step Il transplanting, so they are ready for planting outdoors by the frost free date (approximately May 10 in Missouri). This gives the seedlings the maximum growing period until the first fall frost, approximately 210 growing days. A time sequence might be: February 1st - start germination in greenhouse at a temperature of between 20° C (68° F) and 22.2° C (72° F) for about thirty days, as shown in FIG. 10. March 1st transplant to square deep bottomless containers for additional air pruning of the lateral roots produced in the seed flat pruning. Containers 7.0 cm x 7.0 cm x 7.6 cm (2 3/4 x 2 3/4 x 3 inch) have been used satisfactorily for this step, but the inventors have determined that containers 9.1 cm x 9.1 cm x 10.8 cm (3 9/16 x 3 9/16 x 4 1/4 inch) produce superior plants as shown in FIG. 30. At the end of Step II, the seedlings are between 30.5 cm (12 inches) and 45, 7 cm (18 inches) in height and are ready to be planted in their final growing container outside in a nursery production area.

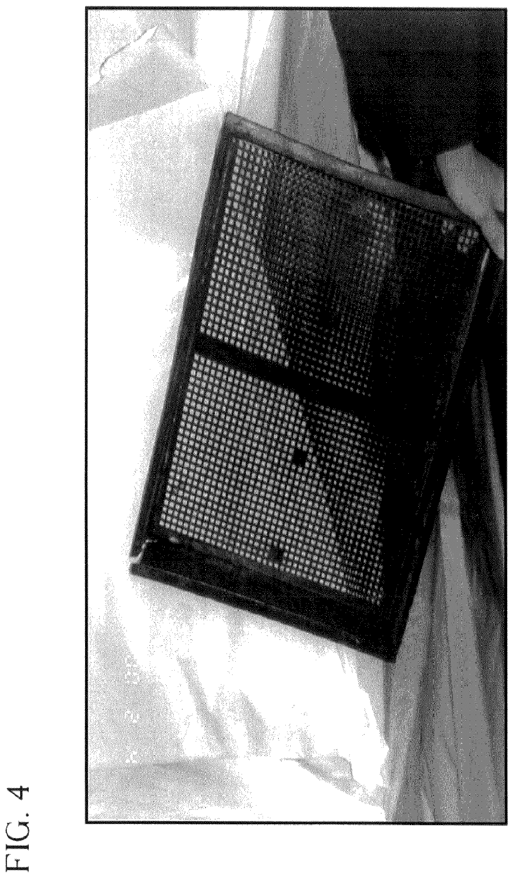

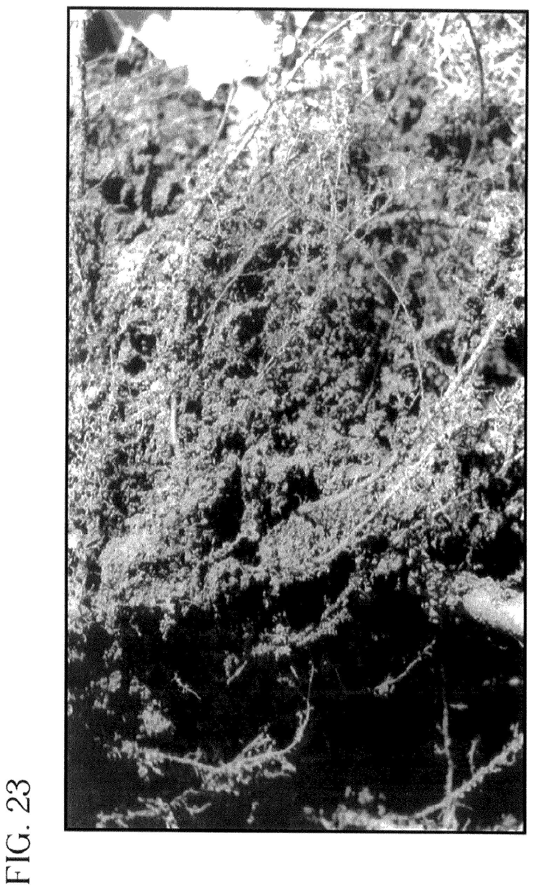

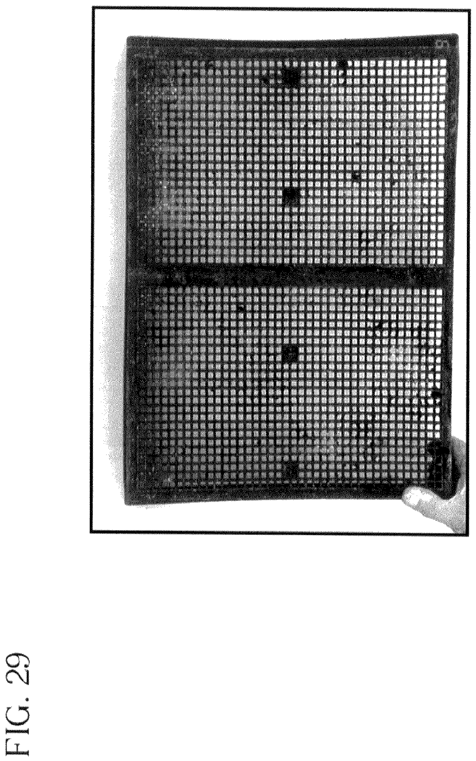

As described above, the seeding is done by placing seed on a bottomless mesh seed flat. While seed flats measuring (47.0 cm x 36.8 cm x 6.4 cm (18 1/2 inches x 14 1/2 inches x 2 1/2 inches) deep with mesh spacing of 0.95 cm (3/8 inches) have been used satisfactorily, as shown in FIG. 29, seed flats measuring 40.0 cm x 40.0 cm x 12.7 3/4 inches x 15 3/4 inches x 5 inches) deep with mesh spacing of 0.95 cm (3/8 inches) (FIG. 4) have been found to be optimum. A soil-less seeding medium and growing medium is preferably used. The seeding medium consists of 40% composted rice hulls, 40% pine bark, 20% sand, which results in a desirable 35% air space has been used satisfactorily, but a medium of 35% composted rice hulls, 35% pine bark, 20% sand, and 10% manure, which results in a desirable 35% air space has been found to be optimum. A complete slow release fertilizer plus micro-nutrients and a wetting agent are added to the medium. The growing medium is also inoculated with mycorrhizae spores which germinate and grow on and inside the tree roots in a symbiotic relationship (see FIG. 23). Research has proven these fungi play an extremely important function on trees. They provide an immune system for the trees, blocking infectious diseases. They form such a dense mass they are able to enhance the capability of the root surface up to 1,000 times further enhancing the uptake of moisture, nutrients, and air resulting in a plant that can withstand greater stress situations and still perform and grow, displaying exceptional vigor.

There is a universal problem of proper nutrient uptake by woody plants in artificial (soil-less) growing media. Through analysis of the media compared to the analysis of the leaves from plants grown in media for Quercus bicolor-Swamp White Oak, the inventors have determined that the addition of 10% composted manure to the growing media of composted rice hulls, pine bark, and sand plus slow release fertilizer and minor trace nutrient improves the nutrient level in the plants, with most of the nutrients moving from a low interpretation in the soil medium to a desired level within the plant resulting in maximum plant growth and performance.

The addition of manure promotes the development of a balanced biological atmosphere within the growing media, promoting the growth of numerous beneficial organisms. These organisms help promote the development of desirable soil fauna that break down organic matter releasing essential bi-products (enzymes etc.) that benefit the plant by enabling uptake of nutrients that are present in the media here-to-fore but not available in a form the plant can absorb. This resulted in a reduced fertilizer rate of 50%, resulting in substantial cost savings. Also there is less impact on the environment because of fewer nutrients leaching and run off while still achieving maximum plant growth.

The inventors have also discovered that the incorporation of 340 g (3/4 of a pound) of Talstar systemic insecticide in each 0.765 m³ (each cubic yard) of growing media trans locates throughout the plants system, helps plants grown in the media to ward off attack by a number of undesirable insect pests including but not limited to Japanese beetle.

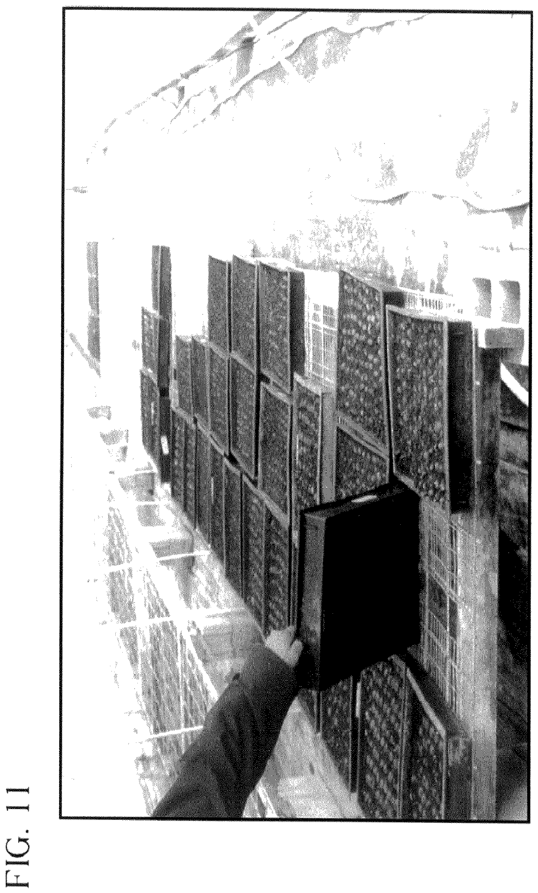

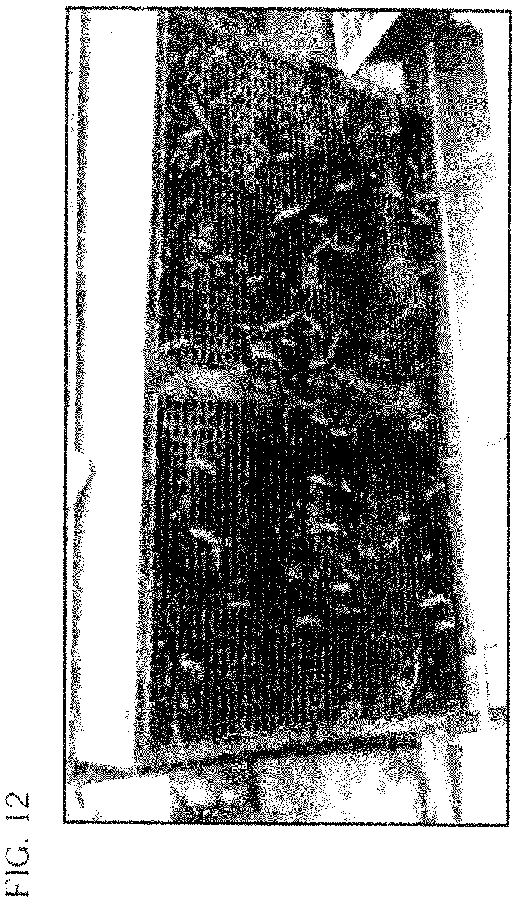

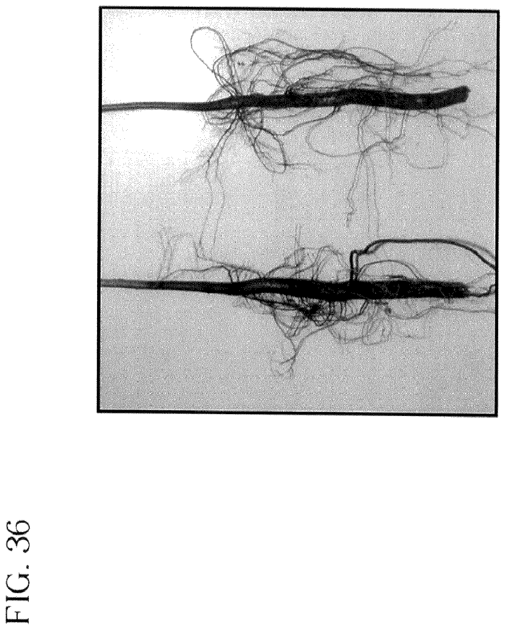

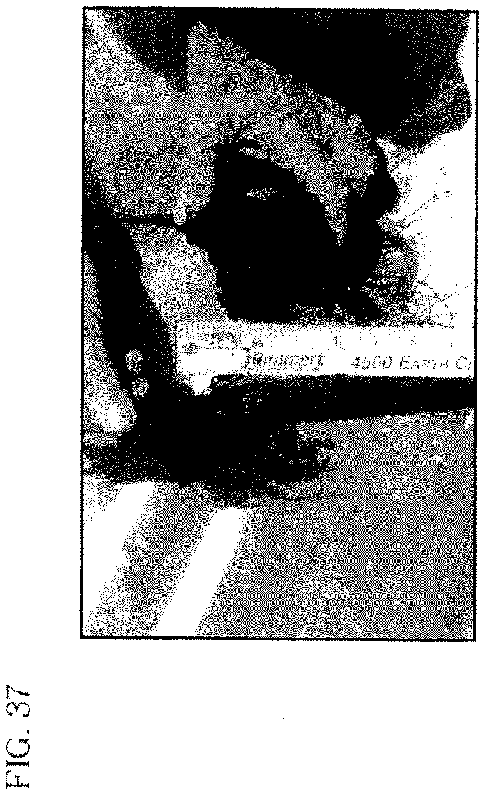

As shown in FIGS. 10 and 11, in the first air-pruning step, seeded flats are placed on raised greenhouse benches with air circulating beneath the benches. As germination of the seed begins to occur in the above-described bottomless flat, the following sequence occurs. The seedling radical (tap root) penetrates down through the media and emerges through the 0.95 cm (3/8 inch) mesh, coming into contact with air circulating beneath the raised bench (see FIG. 12). The root tip is killed (dried) by the air, at a depth of 7.6 cm (3 inches). Compare FIG. 36, showing a conventionally grown pecan seedling, with FIG. 37 showing a pecan seedling grown in accordance with the principles of the present invention. The shallow air pruning achieved with the method of the present invention induces rapid lateral root development high (where most desired) on the tree root collar where their function to the welfare of the tree will be best served.

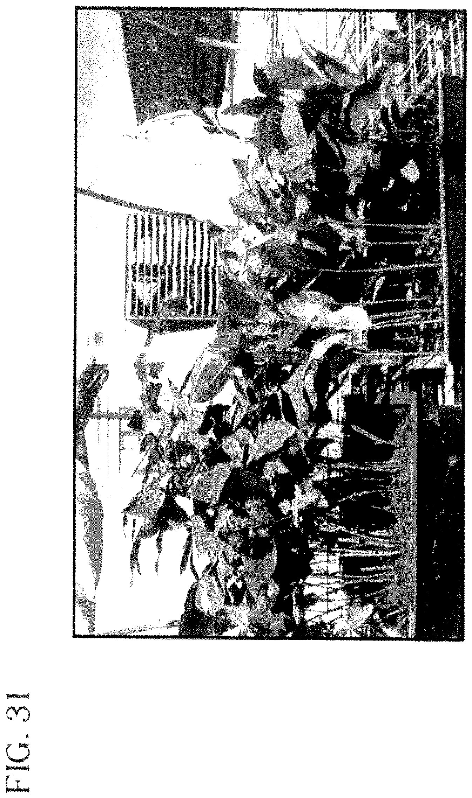

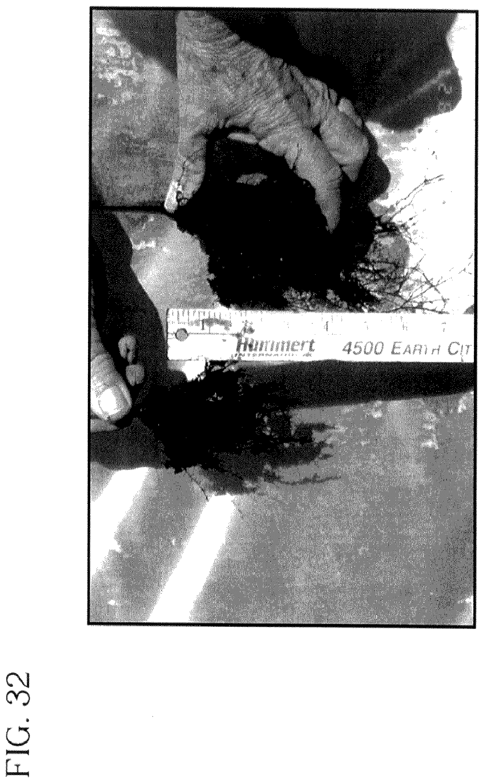

This root pruning occurs at about 7.6 cm (3 inches). Extensive research conducted by the inventors has established that this is the ideal depth for the first air root pruning (FIGS. 31 and 32).

As shown in FIG. 30, in the second air-pruning step, graded seedlings are transplanted into a bottomless band measuring 9.1 cm x 9.1 cm x 10.8 cm (3 9/16 x 3 9/16 x 4 1/4 inches). This size band has been found to give improved growth and improves the root distribution in the production container. The Step II transplanted seedling bottomless bands are placed on raised bottomless benches to promote additional air pruning, which occurs on secondary lateral roots further enhancing the development of a shallow dense root mass with many root tips. The first two steps are timed so the bands are ready to be transplanted outside in the container production area during early May to avoid late frosts, but timed to take advantage of a full growing season. Timing is further important because if properly handled it can coincide with the tree setting a temporary terminal bud. When this occurs, photosynthate is translocated from the leaves down to the roots. This promotes very active root development, thus quick establishment in the container area resulting in accelerated growth.

The inventors' research also determined that the optimum size of the container for Step II is a bottomless tree band measuring 9.1 cm x 9.1 cm x 10.8 cm (3 9/16 inches x 3 9/16 inches x 4 1/4 inches) deep (see FIG. 30) produces the ideal root mass to top (all of plant above soil) ratio.

| BOTTOMLESS BANDS TESTED | |
|---|---|
| Band Size (inches) | Band Size (cm) |
| 1¼ x 1¼ x 3¾ | 3.2 x 3.2 x 9.5 |
| 2½ x 2½ x 3¾ | 6.4 x 6.4 x 9.5 |
| 2¾ x 2¾ x 5½ | 7.0 x 7.0 x 14.0 |
| 3 9/16 x 39/16 x 4¼ | 9.1 x 9.1 x 10.8 |

This shallow air pruning is unique to the method of this invention, and enhances the root system resulting in the production of a superior plant that can survive, perform, and grow faster under every condition tested. Prior root pruning methods typically prune at least 12.7 cm (5 inches) or more. The shallower air pruning of the present invention induces rapid lateral root development high on the tree root collar, where most desirable, and where their function to the welfare of the tree will be best served.

The inventors have also tested various bench heights (i.e., the height from the greenhouse floor to the wire mesh supports) under a strictly controlled greenhouse environment, for both the first and second air root pruning steps. Heights of 30.5, 45.7, 61, 76, and 91 cm (12, 18, 24, 30, and 36 inches) were all carefully tested. While there was little differences in the 76 and 91 cm (30 and 36 inches) bench heights, both were far superior in air flow and subsequent root pruning to 30.5, 45.7 and 61 cm (12, 18, and 24) inches. As a result, the inventors have determined that balancing effectiveness of root pruning versus construction and installation costs, and ergonomic considerations, a height of 76 cm (30 inches) is optimum.

The seedlings are graded to identify the genetically superior individuals. Experience and research has proven that selecting the largest seedlings after their first flush of growth identifies those individuals that will remain dominant, grow faster, and exhibit genetic superiority when grown to a larger size and eventually out planted. When grading, particular attention is given to the combination of height, caliper, and root development. On most species of woody plants the top 50% are retained and transplanted and the remaining plants are discarded. This grading process has proven to be a significant step in tree improvement.

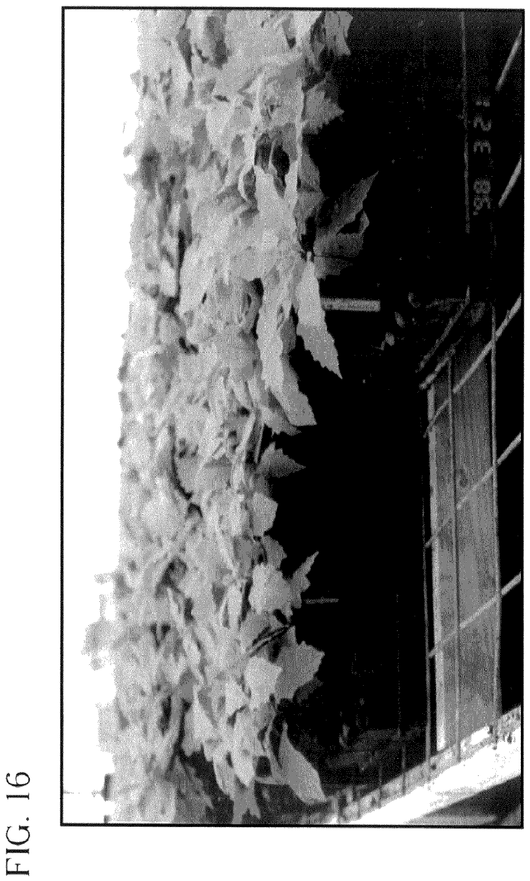

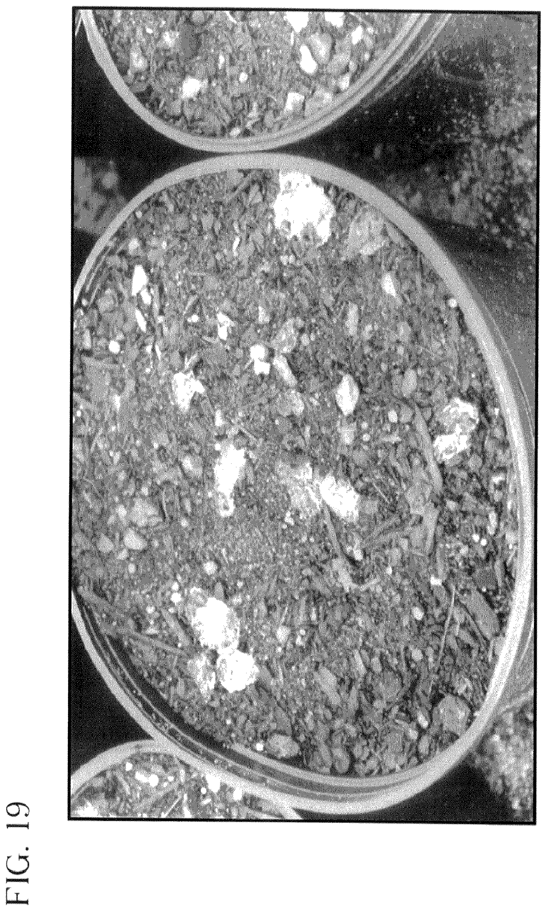

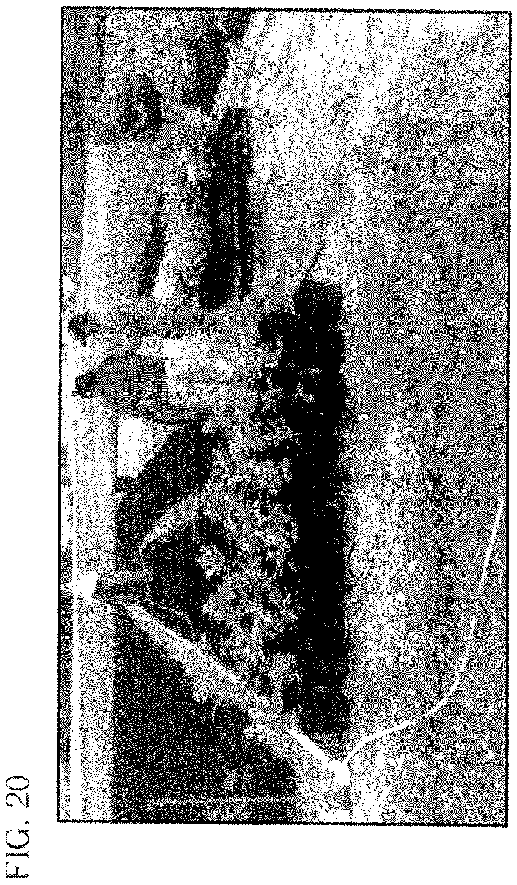

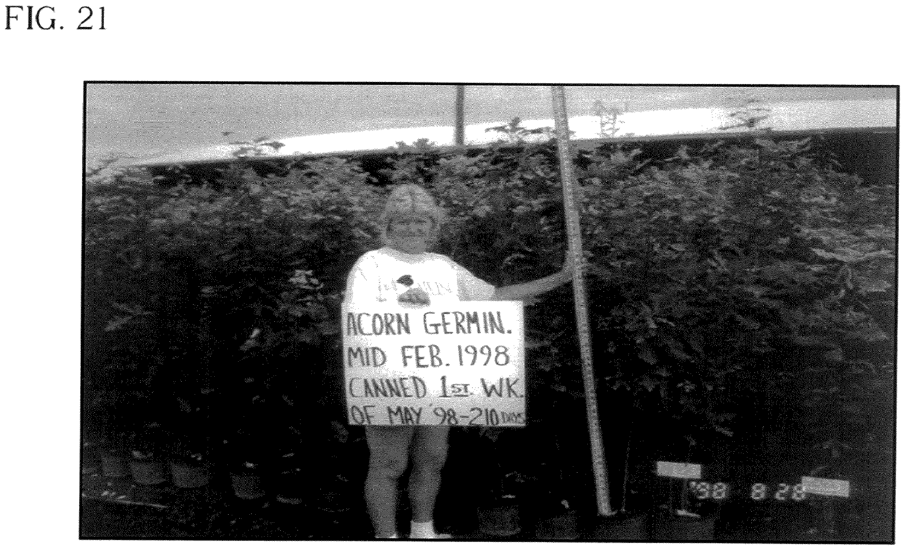

As shown in FIG. 16, while in the greenhouse, the bands are preferably contained in bottomless flats each holding 25 tree bands. When preparing to transplant out of doors, i.e. after having performed the method of developing tree seedlings according to the invention, plants must be handled in a special manner to make the proper transition from a controlled greenhouse environment to a more stressful outdoor environment. The greenhouse process conditions the stomata (openings on the underside of the leaf) to lose their elasticity and they are unable to narrow or close and control transpiration (water loss) and the cuticle, a waxy layer that forms on the leaf surface and protects the leaves has not formed. Both of these conditions correct themselves in 48 hours when placed outdoors in full sunlight. During this period they are intermittently misted to relieve stress while becoming acclimated. After becoming acclimated they are moved to a container production area (see FIG. 20), and transplanted into existing prefilled containers (see FIG. 19). A shallow wide growing container is used, because most of the feeder roots remain in the upper 15.2 to 20.3 cm (six to eight inches) of soil after out-planting. The growing container measures 25.4 cm (10 inches) across and 17.8 cm (7 inches) deep (see FIG. 19). This allows 25% more lateral root development than a smaller size previously used. This production system results in growth to a marketable size in one growing season of approximately 210 days from date of seed germination (see FIG. 21).

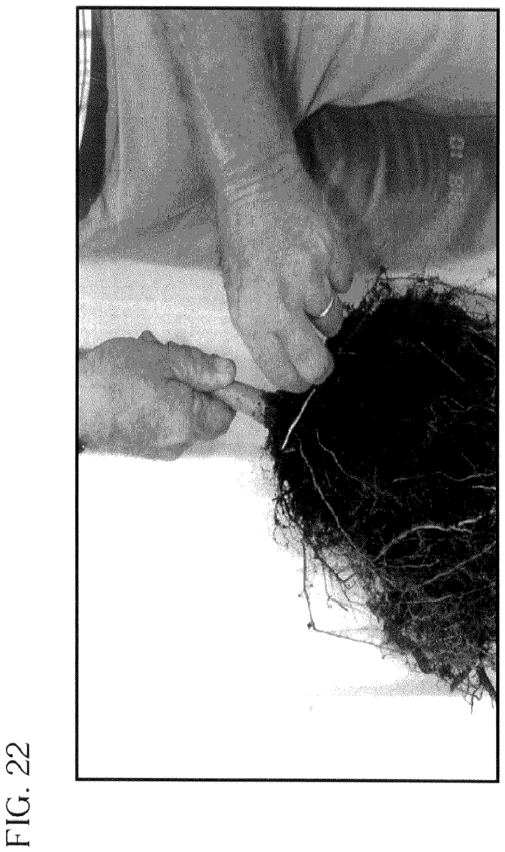

As shown in FIG. 22, the root mass achieved with the methods of the present invention eliminates losses often experienced using conventionally grown trees, especially those recognized to be difficult to transplant, such as Oak, Hickories, Ash, and Nut Trees. Using the methods of this invention, the inventors have achieved consistent survival rates greater than 95%, even at very stressful sites such as wetlands, (where flooding occurs), mine reclamation sites, and construction sites.

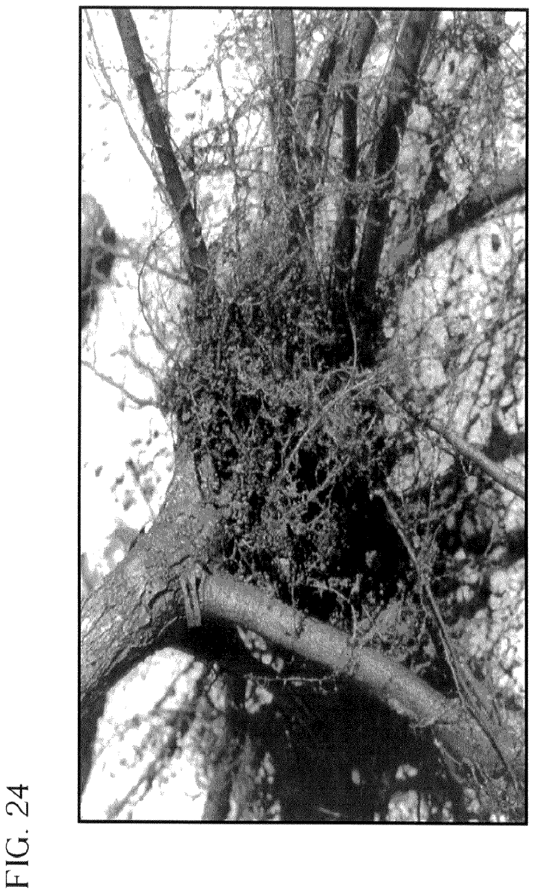

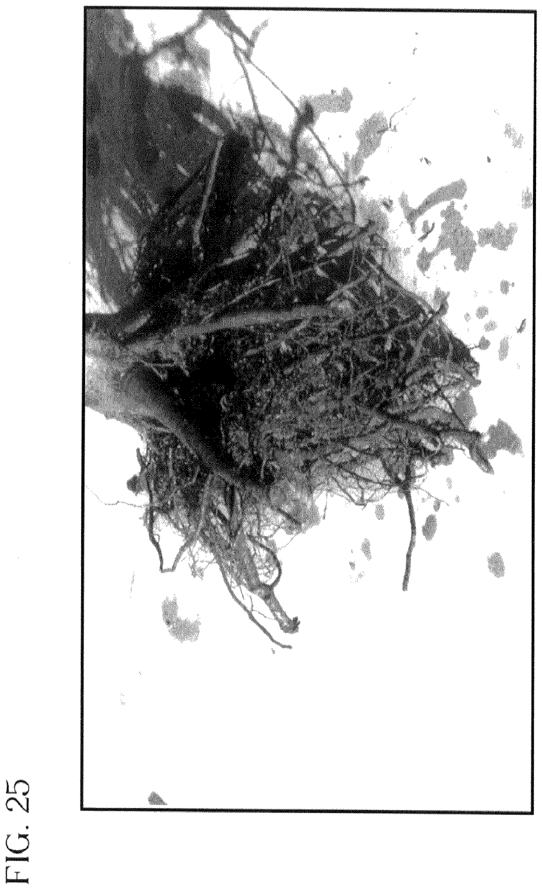

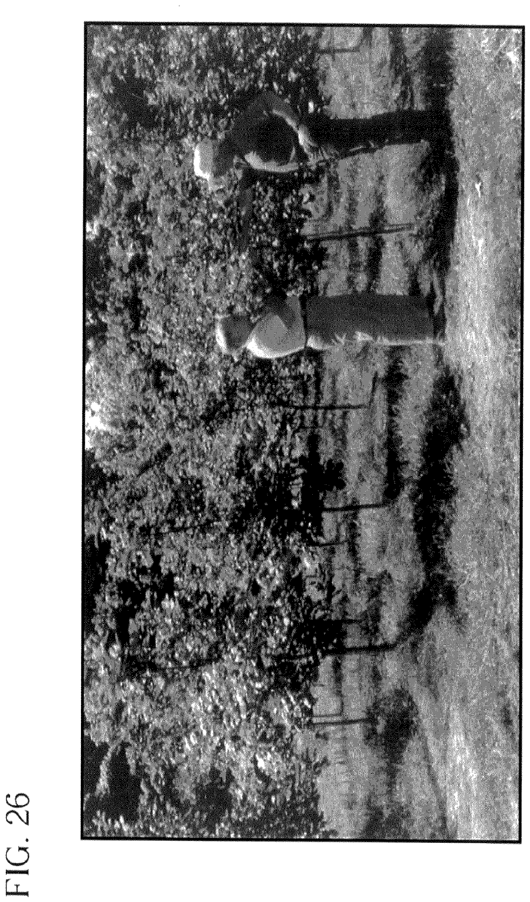

The trees produced with the method of this invention grow an average of three times faster than conventionally grown seedlings. As shown in FIGS. 24, 25, and 26, even after 15 years, the trees grow at 3 times the rate of conventionally produced trees. This accelerated growth rate greatly increases the value and economics of tree farming. Using the methods of this invention, the rate of turnover in most tree production could be increased by 50% or more and make tree farming a profitable and viable growing enterprise.

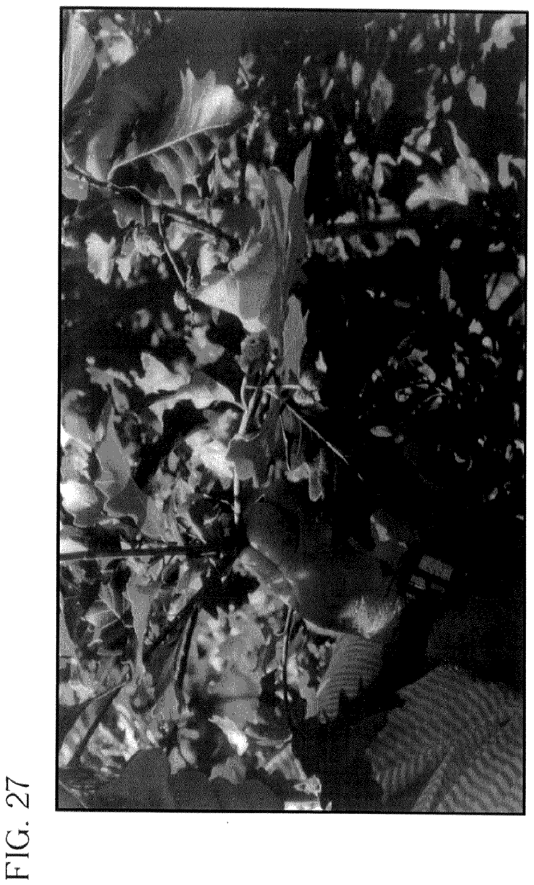

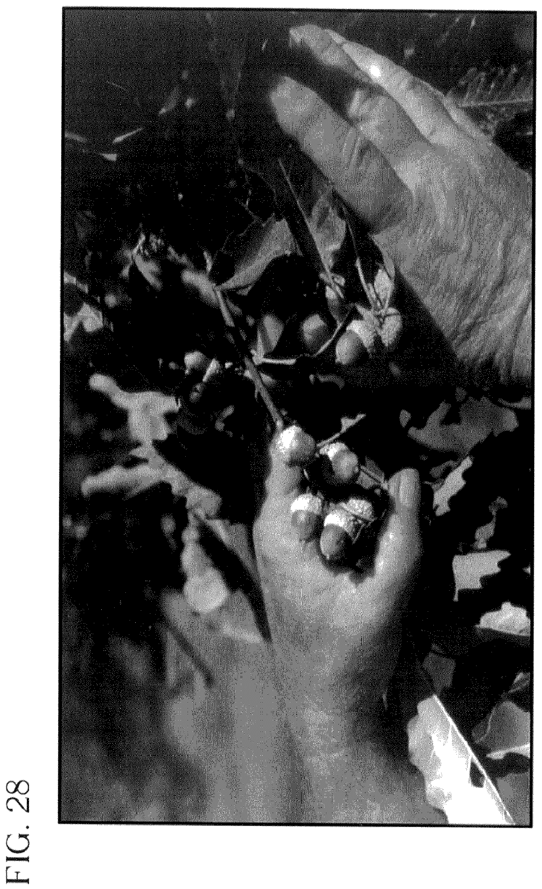

Most varieties of trees grown under this production system have exhibited early flowering and fruiting characteristics. Examples are Swamp White Oak (Quercus bicolor) and Bur Oak (Quercus macrocarpa). It is generally accepted in the literature that these species begin flowering and fruiting at about 20 to 25 years of age. See, Schopmeyer, Seeds of Wood Plants in the United States, Agriculture Handbook No. 450, Forest Service, U.S. Department of Agriculture, Washington, D.C., Table 2 (1974). However, as shown in FIGS. 27 and 28 trees of these species grown in accordance with the methods of the present invention have consistently produced fruit in the 3rd year after out-planting. The inventors believe that these plants have as many root tips (where the hormones are produced) as naturally grown 20 to 25 year old trees. This fast fruiting is very valuable from a regeneration and wildlife food standpoint. The inventors' research indicates this same response occurs in both nut trees and fruit trees, specifically pecans, walnuts and apples.

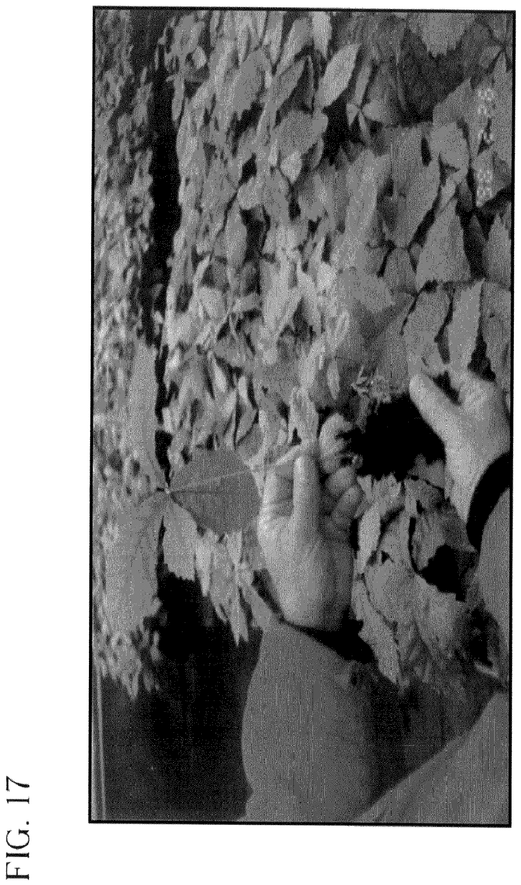

Methods of tree production include: (1) the shallow depth of air pruning (about 6.4 cm (2 1/2")); (2) seed grading to select genetically superior seeds; (3) transplantation after the first root pruning to bottomless bands to further increase root mass, as shown in FIGS. 16, 17, and 28; (4) the shallow depth of the bottomless band compared to deeper containers that accommodated the tap roots 9.1 cm x 9.1 cm x 10.8 cm (3 9/16 inches x 3 9/16 inches x 4 1/4 inches); (5) the growing medium (see FIG. 19) that combines the proper amounts of air, nutrients, and beneficial natural soil born organisms in balance with an enhanced root system that properly utilizes and assimilates them, the result is greatly accelerated growth rates that persists for years; (6) high transplantability and survival of trees produced with the method of this invention, which is nearly 100% survival when out-planted under virtually all conditions, and greater than 95% plus on stressed sites where conventional produced seedlings survived at rates of 2% or less. Sites tested include wetlands that are repeatedly flooded, strip mine reclamation, and other problem planting sites and conditions.

The inventors have propagated approximately 750,000 containerized oak and nut tree seedlings per year, many of which have been out-planted on abandoned mine lands, old wetland sites and fields in central and western Missouri. First-year establishment success for containerized seedlings is approximately twice the success of bare-root seedlings in side-by-side field trials. Greatest mortality resulted from excessive competing vegetation and rodent damage in winter. Tap-rooted hardwoods such as oak, hickory, and walnut responded well to air-pruning, which resulted from using bottomless containers. Seedlings were propagated and placed upon a raised, welded hog or cattle panel, with 10.2 cm (four-inch) squares, protected from squirrels by a wood frame and chicken wire.

Qualitative observation of establishment success suggests a first-season survival rate of 90 percent for air-pruned bur oak and pecan grown in 1.9 liter (half-gallon) bottomless containers. This compares to 40 to 50 percent survival of year old bare-root stock grown at a local nursery. These were side-by-side trials of seedlings planted in prepared rows of prairie soils in Conservation Reserve Program (CRP) crop fields in western Missouri. Rows were set at 4.6 m (15-foot) centers, disked, and planted by hand. Containerized seedlings were planted in fall, and bare-root seedlings were planted in spring. Success rates were slightly higher in very fine sandy loam soils mapped as Bates loam, (2 to 5 percent slopes, fine-loamy, siliceous, therrvic (Typic Argiudolls) compared to silty clay soils mapped as Kenoma (2 to 5 percent slopes, fine, montmorillinitic, thermic Vertic Argiudolls) (USDA 1995). Competition became intense in midsummer as late-season weeds such as common and giant ragweed; cocklebur and begger ticks germinated from the old-field seedbank. The rows were mowed in July to prevent shading of the seedlings.

A second test plot was established on rough-graded, neutral mine spoils (silty clay texture with 15 percent shale channers, 5 percent sandstone pebbles and few sandstone cobbles) in western Missouri. Establishment success in the first season was approximately 75 percent for containerized bur oak and pecan compared to 30 percent for bare-root seedlings. Compaction was minimal since all grading was performed by a D-3 dozer knocking the tops off the spoil-ridges, pushing the fill into the valleys between ridges. Wind-disseminated species, particularly broomsedge, slowly colonized the plots, competing with the seedlings. Adjacent mine spoils were heavily vegetated, enabling deer to browse the plot undisturbed.

A third test plot was established in central Missouri on loess-derived forest soils that had been cleared in the 19th century, farmed and planted to tall fescue in recent decades. In places, much of the A horizon had been eroded and mixed by plowing into the E horizon. The soils were classified as eroded Winfield silt roam (fine-silty mixed mesic. Typic Hapludalfs) (USDA 1994). Fescue sod was removed with a heavy hoe around each seedling to reduce competition at the time of establishment. Spraying also is effective; but the seedlings should be dormant. First-year success rates for containerized bur and northern red oak were 90 percent compared to 25 percent for bare-root.

The following table shows a hypothetical cost/benefit analysis of plants grown in accordance with the principles of the present invention versus conventional bare root plants.

| HYPOTHETICAL COST/BENEFIT, SURVIVAL AND ENHANCED GROWTH RATE COMPARISION BETWEEN SEEDLINGS GROWN IN ACCORDANCE WITH THE PRESENT INVENTION AND BARE ROOT SEEDLING OAK TREES | | | | | |
|---|---|---|---|---|---|
| DESCRIPTION | BARE ROOT 1 | BARE ROOT 2 | BARE ROOT 3 | INVENTION (UPLAND) | INVENTION (DOWNLAND) |
| SURVIVAL RATE | 85% | 50% | 30% | 90% | 90% |
| Cost per 1000 planted | $500 | $500 | $500 | $7500 | $7500 |
| Survival per 1000 planted | 850 | 500 | 300 | 900 | 900 |
| Years of fruit production | 0 | 0 | 0 | 10 | 10 |
| Pounds of fruit production | 0 | 0 | 0 | 36,000 | 36,000 |
| Carbohydrate value (based on corn) | 0 | 0 | 0 | 14,398 | 14,398 |
| Average dhb | 40.6 cm (16 inches) | 40.6 cm (16 inches) | 40.6 cm (16 inches) | 50.8 cm (20 inches) | 61 cm (24 inches) |
| Wood fiber yield per tree | 0.19 m³ (81 brd ft.) | 0.19 m³ (81 brd ft.) | 0.19 m³ (81 brd ft.) | 0.40 m³ (170 brd ft. | 0.61 m³ (260 brd ft. |
| Total volume of wood fiber | 68,850 | 40,500 | 24,300 | 153,000 | 234,000 |
| Value per 1000 planted @ 0.30/0.00236 m³ (0.30/bd ft.) | $20,655 | $12,150 | $7,290 | $45,900 | $70,200 |
| Value of early fruiting | 0 | 0 | 0 | $14,398 | $14,398 |
| Total value | $20,655 | $12,150 | $7,290 | $60,298 | $84,598 |
| Cost | $500 | $500 | $500 | $7500 | $7500 |
| Gross Return | $20,155 | $11,650 | $6,790 | $52,798 | $77,098 |

## Claims

1. A method of developing tree seedlings comprising:
germinating seeds on the surface of a growing medium to obtain the seedlings; and
air pruning the seedling roots at a depth of 7.6 cm (3 inches) to achieve an improved root mass,
wherein the growing medium comprises 40% composted rice hulls, 40% pine bark, and 20% sand, resulting in a 35% air space, or comprises 35% composted rice hulls, 35% pine bark, 20% sand, and 10% manure, resulting in a 35% air space.

2. The method according to claim 1, wherein the step of air pruning the roots comprises growing the seedlings in bottomless flats at a height of between about 76 cm (30 inches) and about 91 cm (36 inches) above the ground.

3. The method according to claim 1 or 2, wherein the step of air pruning the seedling roots at a depth of 7.6 cm (3 inches) is a first air pruning step, the method further comprising transplanting the seedlings after the first air pruning step into containers of about 9.1 cm (3 9/16 inches) by 9.1 cm (3 9/16 inches) by 10.8 cm (4 1/4 inches), or into containers of about 7.0 cm (2 3/4 inches) by 7.0 cm (2 3/4 inches) by 7.6 cm (3 inches), for a second root air pruning step.

4. The method according to claim 1, wherein air pruning the seedling roots at a depth of 7.6 cm (3 inches) is performed by subjecting the seedlings to a first air root pruning by growing the seedlings in a bottomless container of about 7.6 cm (3 inches) deep, and the seedlings are subjected to a second air root pruning by growing the seedlings in a bottomless container of about 10.8 cm (4 1/4 inches) deep, the method improving the root structure of the tree seedlings.

5. The method according to claim 4, wherein subjecting the seedlings to the air root pruning comprises supporting the container at a height of between about 76 cm (30 inches) and 91 cm (36 inches) above the ground.

6. The method according to claim 4 or 5, further comprising stratifying the seeds on the growing medium at 0°C (32 degrees F).

7. The method according to claim 1, wherein before germinating the seeds on the surface of the growing medium
the growing medium is obtained by combining 40% composted rice hulls, 40% pine bark, and 20% sand, resulting in a 35% air space, or 35% composted rice hulls, 35% pine bark, 10% manure, and 20% sand, resulting in a 35% air space,
the growing medium is placed in a first open-bottom container to a depth of 7.6 cm (3 inches),
the seeds are selected based on seed weight,
the seeds are placed on the surface of the growing medium,
the seeds are stratified on the growing medium at 0°C (32 degrees F),
and further wherein
air pruning the seedling roots at a depth of 7.6 cm (3 inches) is performed by allowing roots of the seedlings to undergo a first air pruning at the 7.6 cm (3 inch) depth and at a height of between about 76 cm and 91 cm (30 and 36 inches) above the ground,
the air-pruned seedlings are transplanted to a second open-bottom container having a depth of 10.8 cm (4 1/4 inches), and
the seedlings are allowed to undergo a second root air pruning at the 10.8 cm (4 1/4 inch) depth, and at a height of between about 76 cm and 91 cm (30 and 36 inches) above the ground.

8. The method according to any one of claims 1 to 7, wherein the growing medium further comprises micronutrients and a wetting agent.

9. The method according to any one of claims 1 to 8, wherein the growing medium is inoculated with mycorrhizae spores.

## Patentansprüche

1. Verfahren zur Entwicklung von Baumsämlingen aufweisend:
Keimen von Samen auf der Oberfläche eines Wachstumsmediums, um die Sämlinge zu erhalten; und
Stutzen der Sämlingswurzeln mittels Luft bei einer Tiefe von 7,6 cm (3 Zoll), um eine verbesserte Wurzelmasse zu erzielen,
wobei das Wachstumsmedium 40% kompostierte Reisspelzen, 40% Kiefernrinde und 20% Sand aufweist, was zu 35% Luftraum führt, oder 35% kompostierte Reisspelzen, 35% Kiefernrinde, 20% Sand und 10% Dung aufweist, was zu 35% Luftraum führt.

2. Verfahren nach Anspruch 1, wobei der Schritt des Stutzens der Wurzeln mittels Luft das Wachsenlassen der Sämlinge in Saatkisten ohne Boden in einer Höhe von zwischen etwa 76 cm (30 Zoll) und etwa 91 cm (36 Zoll) über der Bodenfläche umfasst.

3. Verfahren nach Anspruch 1 oder 2, wobei der Schritt des Stutzens der Sämlingswurzeln mittels Luft bei einer Tiefe von 7,6 cm (3 Zoll) ein erster Schritt des Stutzens mittels Luft ist, wobei das Verfahren außerdem das Verpflanzen der Sämlinge nach dem ersten Schritt des Stutzens mittels Luft in Behälter von etwa 9,1 cm (3 9/16 Zoll) mal 9,1 cm (3 9/16 Zoll) mal 10,8 cm (4 1/4 Zoll), oder in Behälter von etwa 7,0 cm (2 3/4 Zoll) mal 7,0 cm (2 3/4 Zoll) mal 7,6 cm (3 Zoll) für einen zweiten Schritt des Stutzens der Wurzeln mittels Luft umfasst.

4. Verfahren nach Anspruch 1, wobei das Stutzen der Sämlingswurzeln mittels Luft bei einer Tiefe von 7,6 cm (3 Zoll) durchgeführt wird durch Unterziehen der Sämlinge einem ersten Stutzen der Wurzeln mittels Luft durch Wachsenlassen der Sämlinge in einem Behälter ohne Boden mit einer Tiefe von etwa 7,6 cm (3 Zoll), und wobei die Sämlinge einem zweiten Stutzen der Wurzeln mittels Luft unterzogen werden durch Wachsenlassen der Sämlinge in einem Behälter ohne Boden mit einer Tiefe von etwa 10,8 cm (4 1/4 Zoll), wobei das Verfahren die Wurzelstruktur der Baumsämlinge verbessert.

5. Verfahren nach Anspruch 4, wobei das Unterziehen der Sämlinge dem Stutzen der Wurzeln mittels Luft ein Halten des Behälters in einer Höhe von zwischen etwa 76 cm (30 Zoll) und 91 cm (36 Zoll) über der Bodenfläche umfasst.

6. Verfahren nach Anspruch 4 oder 5, außerdem aufweisend ein Stratifizieren der Samen auf dem Wachstumsmedium bei 0°C (32°F).

7. Verfahren nach Anspruch 1, wobei vor dem Keimen der Samen auf der Oberfläche des Wachstumsmediums
das Wachstumsmedium erhalten wird durch Vereinigen von 40% kompostierten Reisspelzen, 40% Kiefernrinde und 20% Sand, was zu einem Luftraum von 35% führt, oder von 35% kompostierten Reisspelzen, 35% Kiefernrinde, 10% Dung und 20% Sand, was zu einem Luftraum von 35% führt,
das Wachstumsmedium in einen ersten Behälter mit offenem Boden bis zu einer Tiefe von 7,6 cm (3 Zoll) eingebracht wird,
die Samen auf der Basis des Samengewichts ausgewählt werden,
die Samen auf der Oberfläche des Wachstumsmediums platziert werden,
die Samen auf dem Wachstumsmedium bei 0°C (32°F) stratifiziert werden,
und wobei außerdem
das Stutzen der Sämlingswurzeln mittels Luft bei einer Tiefe von 7,6 cm (3 Zoll) durchgeführt wird, indem man die Wurzeln der Sämlinge ein erstes Stutzen mittels Luft bei der Tiefe von 7,6 cm (3 Zoll) und bei einer Höhe von zwischen etwa 76 cm und 91 cm (30 und 36 Zoll) über der Bodenfläche durchmachen lässt,
die mittels Luft gestutzten Sämlinge in einen zweiten Behälter mit offenem Boden, der eine Tiefe von 10,8 cm (4 1/4 Zoll) hat, verpflanzt werden, und wobei man
die Sämlinge ein zweites Stutzen der Wurzeln mittels Luft bei der Tiefe von 10,8 cm (4 1/4 Zoll) und bei einer Höhe zwischen etwa 76 cm und 91 cm (30 und 36 Zoll) über der Bodenfläche durchmachen lässt.

8. Verfahren nach einem der Ansprüche 1 bis 7, wobei das Wachstumsmedium außerdem Spurennährstoffe und ein Benetzungsmittel enthält.

9. Verfahren nach einem der Ansprüche 1 bis 8, wobei das Wachstumsmedium mit Mykorrhiza-Sporen beimpft wird.

## Revendications

1. Procédé destiné à développer des plantules d'arbres, comprenant les étapes consistant à :
faire germer des semences sur la surface d'un milieu de culture pour obtenir les plantules, et
exposer à l'air les racines de plantules à une profondeur de 7,6 cm (3 pouces) afin d'atteindre une masse racinaire améliorée,
dans lequel le milieu de culture comprend 40 % de coques de riz compostées ; 40 % d'écorce de pin, et 20 % de sable, donnant 35 % d'espace d'air, ou comprend 35 % de coques de riz compostées ; 35 % d'écorce de pin, 20 % de sable, et 10% d'engrais, donnant 35 % d'espace d'air.

2. Procédé selon la revendication 1, dans lequel l'étape pour exposer à l'air les racines comprend l'étape pour faire pousser les plantules dans des terrines sans fond à une hauteur comprise entre environ 76 cm (30 pouces) et environ 91cm (36 pouces) au-dessus du sol.

3. Procédé selon la revendication 1 ou 2, dans lequel l'étape pour exposer à l'air les racines de plantules à une profondeur comprise entre environ 7,6 cm (3 pouces) est une première étape d'exposition à l'air, le procédé comprenant en outre la transplantation des plantules après la première étape d'exposition à l'air dans des récipients d'environ 9,1 cm (3 9/16 pouces) sur 9,1 cm (3 9/16 pouces) sur 10,8 cm (4 1/4 pouces), ou dans des récipients d'environ 7,0 cm (2 3/4 pouces) sur 7,0 cm (2 3/4 pouces) sur 7,6 cm (3 pouces), lors d'une seconde étape d'exposition à l'air des racines.

4. Procédé selon la revendication 1, dans lequel l'étape pour exposer à l'air les racines de plantules à une profondeur de 7,6 cm (3 pouces) est réalisée en soumettant les plantules à une première étape d'exposition à l'air, en faisant pousser les plantules dans un récipient sans fond d'environ 7,6 cm (3 pouces) de profondeur, puis les plantules sont soumises à une seconde étape d'exposition à l'air, en faisant pousser les plantules dans un récipient sans fond d'environ 10,8 cm (4 1/4 pouces) de profondeur, le procédé améliorant la structure racinaire des plantules d'arbres.

5. Procédé selon la revendication 4, dans lequel l'étape pour soumettre les plantules à une exposition à l'air des racines comprend l'étape pour supporter le récipient à une hauteur comprise entre environ 76 cm (30 pouces) et environ 91cm (36 pouces) au-dessus du sol.

6. Procédé selon la revendication 4 ou 5, comprenant en outre l'étape pour stratifier les semences sur le milieu de culture à 0 °C (32 degrés F).

7. Procédé selon la revendication 1, dans lequel avant de faire germer les semences sur la surface du milieu de culture,
le milieu de culture est obtenu en combinant 40 % de coques de riz compostées ; 40 % d'écorce de pin, et 20 % de sable, donnant 35 % d'espace d'air, ou 35 % de coques de riz compostées ; 35 % d'écorce de pin, 10 % d'engrais, et 20 % de sable, donnant 35 % d'espace d'air ;
le milieu de culture est placé dans un premier récipient à fond ouvert à une profondeur de 7,6 cm (3 pouces) ;
les semences sont sélectionnées sur la base du poids de semence ;
les semences sont placées sur la surface du milieu de culture ;
les semences sont stratifiées sur le milieu de culture à 0 °C (32 degrés F),
et dans lequel en outre,
l'étape pour exposer à l'air les racines de plantules à une profondeur de 7,6 cm (3 pouces) est réalisée en permettant aux racines des plantules de subir une première étape d'exposition à l'air à une profondeur de 7,6 cm (3 pouces) et à une hauteur comprise entre environ 76 cm et 91 cm (30 et 36 pouces) au-dessus du sol ;
les plantules ayant subi une exposition à l'air sont transplantées dans un second récipient à fond ouvert présentant une profondeur de 10,8 cm (4 1/4 pouces), ou
les plantules sont soumises à une seconde exposition à l'air à une profondeur de 10,8 cm (4 1/4 pouces), et à une hauteur comprise entre environ 76 cm et 91 cm (30 et 36 pouces) au-dessus du sol.

8. Procédé selon l'une quelconque des revendications 1 à 7, dans lequel le milieu de culture comprend en outre des micronutriments et un agent mouillant.

9. Procédé selon l'une quelconque des revendications 1 à 8, dans lequel le milieu de culture est inoculé avec des spores mycorhiziennes.
